# EUROPÄISCHE PATENTANMELDUNG

(11) **EP 1 138 435 A2**
(43) Veröffentlichungstag der Anmeldung: **04.10.2001**
(21) Anmeldenummer: 01105181.0
(22) Anmeldetag: 02.03.2001
(51) Int. Cl.: B23Q 17/00

(54) **Werkzeugmaschine mit Drehgebersystem**

(30) Priorität: 28.03.2000 DE 10015419
(71) Anmelder: EMCO Maier Gesellschaft m.b.H., 5400 Hallein-Taxach (AT)
(72) Erfinder: Ritt, Josef, 5431 Kuchl (AT); Griessner, Johannes, 5411 Oberalm (AT)
(74) Vertreter: Schaumburg, Thoenes & Thurn

(57) **Zusammenfassung**

Eine Werkzeugmaschine mit einem Maschinenbett (14) und mindestens einer Spindel oder Welle (18), die in einer bettfesten Lageranordnung (10) drehbar gelagert ist, hat ein mit der Spindel (18) gekoppeltes Drehgebersystem (40, 42), das innerhalb der Lageranordnung (10) untergebracht ist.

## Beschreibung

Die Erfindung betrifft eine Werkzeugmaschine mit einem Maschinenbett und mindestens einer Spindel oder Welle, die in einer bettfesten Lageranordnung drehbar gelagert und mit einem Drehgebersystem gekoppelt ist.

Bei Werkzeugmaschinen dieser Art besteht das Problem, daß Meßsysteme, welche die Drehzahl oder den Drehwinkel einer Spindel oder Welle hochpräzise messen können, auch sehr empfindlich gegenüber Umgebungseinflüssen sind. Zum einen sind die Teile der Werkzeugmaschine, deren Lage oder Bewegung erfaßt werden soll, hohen mechanischen Belastungen ausgesetzt, die zu unkontrollierten und ungewollten Auslenkungen und Schwingungen führen können. Zum anderen werden die Signale der Meßsysteme auch durch Verschmutzungspartikel wie z.B. feinste Späne beeinflußt, die in jeder spanabhebenden Werkzeugmaschine vorhanden sind.

Der Erfindung liegt die Aufgabe zugrunde, eine Werkzeugmaschine der vorstehend genannten Art anzugeben, bei der das Drehgebersystem optimal gegenüber äußeren Einflüssen geschützt ist, um hochpräzise Meßresultate zu erhalten.

Diese Aufgabe wird erfindungsgemäß dadurch gelöst, daß das Drehgebersystem innerhalb der Lageranordnung untergebracht ist.

Die erfindungsgemäße Lösung hat zwei wesentliche Vorteile. Zum einen ist die Lageranordnung einer Spindel oder Welle an einer Werkzeugmaschine grundsätzlich hermetisch abgeschlossen, da sonst die einzelnen Lager durch Kühlflüssigkeit, feinste Metallspäne oder andere Verschmutzungspartikel in kürzester Zeit ruiniert wären. Diese hermetische Abdichtung der Lageranordnung gewährleistet einen optimalen Schutz des Drehgebersystems gegenüber Verschmutzung. Zum anderen ist der Einfluß von Radialkräften auf die Spindel oder Welle innerhalb der Lageranordnung am geringsten, so daß hier auch unter höchster Belastung Störungen der Meßresultate aufgrund von Radialkräften weitgehend ausgeschlossen werden können.

Für den Einbau in der Lageranordnung eignet sich insbesondere ein an sich bekanntes Drehgebersystem, das ein mit der Spindel drehfest gekoppeltes Meßzahnrad und einen diesem zugeordneten Magnetfeldsensor umfaßt. Vorzugsweise ist dabei das Meßzahnrad mit einer Distanzhülse verbunden, die zwischen Wälzlagerringen der Lageranordnung eingespannt ist. Beispielsweise kann das Meßzahnrad einstückig mit der Distanzhülse ausgebildet sein, wodurch Toleranzen bei der Montage des Meßzahnrades relativ zur Spindel verringert werden können und dadurch die Genauigkeit des Drehgebersystems erhöht wird.

Der Magnetfeldsensor selbst wird vorzugsweise in einer Aussparung des Lagerhäuses angeordnet und zwar zweckmäßigerweise so, daß er radial bezüglich der Spindelachse einstellbar ist. Die Aussparung ist durch eine Abdeckung hermetisch abgeschlossen. Der Magnetfeldsensor bleibt aber für Justier- oder Wartungsarbeiten gut zugänglich.

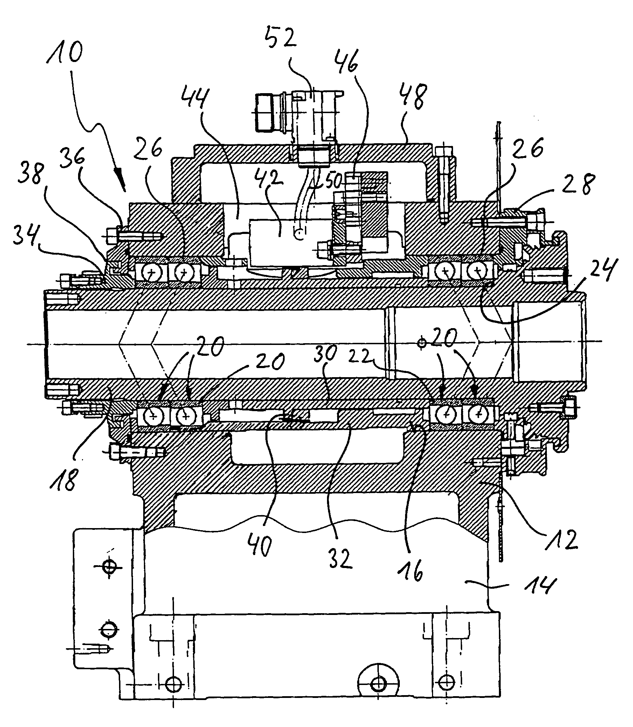

Die folgende Beschreibung erläutert in Verbindung mit der beigefügten Zeichnung die Erfindung anhand eines Ausführungsbeispieles. Die einzige Figur zeigt einen die Spindelachse enthaltenden Schnitt durch eine Spindellagerung einer im übrigen nicht dargestellten Werkzeugmaschine.

Die in der Figur dargestellte allgemein mit 10 bezeichnete Lageranordnung hat einer Lagergehäuse 12, das an seinem unteren Ende mit einem nicht näher dargestellten Maschinenbett 14 verbunden ist und eine durchgehende zylindrische Lagerbohrung 16 hat. In der zylindrischen Lagerbohrung 16 ist eine Hohlspindel 18 mit Hilfe von Wälzlagern 20 gelagert, die paarweise nahe den Ende der Lagerbohrung 16 angeordnet und so ausgebildet sind, daß die Spindel 18 in beiden axialen Richtungen Axialkräfte aufnehmen kann. Das in der Figur rechte äußere Lager 20 liegt mit seinem inneren Ring 22 an einem Bund 24 der Spindel und mit seinem äußeren Lagerring 26 an einem Ringflansch 28 an, der das aus der Lagerbohrung 16 herausragende Ende der Spindel 18 umgibt und die Lagerbohrung 16 dicht verschließt. Zwischen den Wälzlagerpaaren 20 befinden sich eine innere Distanzhülse 30 und eine äußere Distanzhülse 32, die mit ihren axialen Enden jeweils an den inneren Lagerringen 22 bzw. den äußeren Lagerringen 26 der beiden inneren Wälzlager 20 anliegen. Die inneren Lagerringe 22 der Wälzlager 20 und die innere Distanzhülse 30 werden durch einen auf der Spindel 18 sitzenden Spannring 34 axial verspannt. Die äußeren Lagerringe 26 der Wälzlager 20 und die äußere Distanzhülse 32 werden in gleicher Weise durch einen Ringflansch 36 verspannt, der auf das in der Figur linke Ende des Lagergehäuses 12 aufgeschraubt ist. Der Spannring 34 und der Ringflansch 36 greifen so ineinander, daß sie eine Labyrinthdichtung 38 bilden. Die soweit beschriebene Lageranordnung ist an sich bekannt.

Einstückig mit der inneren Distanzhülse 30 ist ein Meßzahnrad 40 ausgebildet, das aus einem weichmagnetischen Stahl besteht und in an sich bekannter Weise den Maßstab eines magnetischen Zahnradgebers bildet, der eine hochpräzise Messung des Drehwinkels bzw. der Drehzahl der Spindel ermöglicht. Dem Meßzahnrad 40 ist ein Magnetfeldsensor 42 zugeordnet, der in einer Aussparung oder Tasche 44 in dem Lagergehäuse 12 angeordnet ist. Die Anordnung erfolgt mittels einer Schiebeführung 46 derart, daß der Magnetfeldsensor 42 radial bezüglich der Spindelachse exakt auf einen vorgegebenen Abstand von dem Umfang des Meßzahnrades 40 eingestellt werden kann. Die Aussparung 44 kann durch einen Deckel 48 hermetisch verschlossen werden. Durch den Deckel 48 sind die Versorgungs- und Signalleitungen 50 für den Magnetfeldsensor 42 hindurchgeführt und mit einem Anschlußkopf 52 verbunden, durch den der Magnetfeldsensor 42 mit einer Auswerte- und Anzeigeeinheit verbunden werden kann.

Auf der der inneren Distanzhülse 30. zugewandten Seite trägt der Magnetfeldsensor 42 magnetfeldempfindliche Widerstände. Ein in dem Magnetfeldsensor 42 enthaltener Magnet erzeugt ein Magnetfeld, das die magnetfeldempfindlichen Widerstände durchsetzt. Der Magnetfluß durch die magnetfeldempfindlichen Widerstände verändert sich in Abhängigkeit des an den Widerständen vorbeilaufenden Meßzahnrades periodisch je nach dem, ob ein Zahn oder eine Zahnlücke den magnetfeldempfindlichen Widerständen gegenüberliegt. Das Meßsystem ist als solches bekannt und braucht daher nicht näher erläutert zu werden.

Aus der vorstehenden Beschreibung erkennt man, daß das Meßzahnrad 40 axial an einer Stelle liegt, an der es einstückig mit der Distanzhülse 30 ausgebildet, einen für den Meßvorgang sehr wichtigen optimalen Rundlauf gewährleistet. Aus diesem Grund sind Abstandsunterschiede während eines Spindelumlaufes zwischen dem Magnetfeldsensor und dem Meßzahnrad äußerst gering. Dies wiederum ermöglicht ein kräftiges und exaktes Meßsignal. Ferner befindet sich das Drehgebersystem oder Meßsystem 40, 42 in einem Raum, der auch unter den rauhen Arbeitsbedingungen einer Werkzeugmaschine frei von Verunreinigungen gehalten werden kann, insbesondere frei von Metallspänen, die das magnetische Meßsystem stören könnten.

## Patentansprüche

1. Werkzeugmaschine mit einem Maschinenbett (14) und mindestens einer Spindel oder Welle (18), die in einer bettfesten Lageranordnung (10) drehbar gelagert und mit einem Drehgebersystem (40, 42) gekoppelt ist, **dadurch gekennzeichnet, daß** das Drehgebersystem (40, 42) innerhalb der Lageranordnung (10) untergebracht ist.

2. Werkzeugmaschine nach Anspruch 1, **dadurch gekennzeichnet, daß** das Drehgebersystem ein mit der Spindel (18) drehfest gekoppeltes Meßzahnrad (40) und einen diesem zugeordneten Magnetfeldsensor (42) umfaßt.

3. Werkzeugmaschine nach Anspruch 2, **dadurch gekennzeichnet, daß** das Meßzahnrad (40) mit einer Distanzhülse (30) verbunden ist, die zwischen Wälzlagerringen (22) der Lageranordnung (10) eingespannt ist.

4. Werkzeugmaschine nach Anspruch 3, **dadurch gekennzeichnet, daß** das Meßzahnrad (40) einstückig mit der Distanzhülse (30) ausgebildet ist.

5. Werkzeugmaschine nach einem der Ansprüche 2 bis 4, **dadurch gekennzeichnet, daß** der Magnetfeldsensor (42) in einer Aussparung (44) des Lagergehäuses (12) angeordnet ist, die durch eine Abdeckung (48) hermetisch abschließbar ist.

6. Werkzeugmaschine nach Anspruch 5, **dadurch gekennzeichnet, daß** der Magnetfeldsensor (42) in der Aussparung (44) radial verstellbar ist.
